(19) Europäisches Patentamt
European Patent Office
Office européen des brevets

(11) **EP 4 095 179 A1**

(12) **EUROPEAN PATENT APPLICATION**

(43) Date of publication:
**30.11.2022 Bulletin 2022/48**

(21) Application number: **22175247.0**

(22) Date of filing: **24.05.2022**

(51) International Patent Classification (IPC):
***C08G 63/183*** (2006.01)   ***C08J 5/18*** (2006.01)

(52) Cooperative Patent Classification (CPC):
**C08G 63/183; C08J 5/18;** C08J 2367/02;
C08J 2467/02

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.05.2021 KR 20210067191**

(71) Applicant: **Ecovance Co. Ltd**
**Suwon-si, Gyeonggi-do 16338 (KR)**

(72) Inventors:
• **KIM, Kyung Youn**
**16338 Gyeonggi-do (KR)**
• **KIM, Hoon**
**16338 Gyeonggi-do (KR)**
• **KIM, Seong Dong**
**16338 Gyeonggi-do (KR)**
• **KIM, Hyung Mo**
**16338 Gyeonggi-do (KR)**

(74) Representative: **Dehns**
**St. Bride's House**
**10 Salisbury Square**
**London EC4Y 8JD (GB)**

(54) **BIODEGRADABLE POLYESTER RESIN, PREPARATION METHOD THEREOF, AND BIODEGRADABLE POLYESTER MOLDED ARTICLE COMPRISING THE SAME**

(57)   The present invention relates to biodegradable polyester resin, wherein the ratio (X/Y) of the number (X) of the first repeat unit comprising a first diol residue and an aromatic dicarboxylic acid residue to the number (Y) of the second repeat unit comprising a second diol residue and an aliphatic dicarboxylic acid residue is 0.8 to 3.0, and the impact strength index is 2.2 or more, and to a process for preparing the same. The biodegradable polyester resin can further enhance the impact absorption energy and hardness as compared with conventional biodegradable resins. Further, it can provide a biodegradable polyester film or molded article that is excellent in impact resistance, durability, and formability, along with biodegradability. Thus, it can be utilized in more diverse fields.

[Fig. 1]

## Description

### Technical Field

The present invention relates to a biodegradable polyester resin, to a process for preparing the same, and to a biodegradable polyester molded article comprising the same.

### Background Art

In recent years, as concerns about environmental issues have increased, there is a need for a solution to the problem of dealing with various household products, in particular, disposable products. Specifically, since polymeric materials are inexpensive and excellent in such characteristics as processability, they are widely used to manufacture various products such as films, fibers, packaging materials, bottles, containers, and the like; however, they have disadvantages in that when the lifespan of a used product is over, harmful substances are discharged if it is incinerated and that it takes hundreds of years to be completely decomposed naturally depending on the type thereof.

In order to overcome the limitations of these polymers, studies on biodegradable polymers that can be decomposed in a faster time are being actively conducted. Poly(lactic acid), polybutyleneadipate terephthalate (PBAT), and polybutylene succinate (PBS) are used as biodegradable polymers. Although these biodegradable polymers have excellent flexibility and are stretched well, when used as a final product, they have poor impact resistance, which may cause tearing or bursting problems. In addition, it is difficult to expand its application to various fields such as injection molded products due to their poor hardness characteristics, so that their use is limited.

In order to overcome this limitation, a method of adding an additive such as an impact strength improver or compatibilizer has been used. However, there has been a problem in that it may adversely affect biodegradability, thereby producing microplastics.

Accordingly, it is necessary to develop a polymer resin that is biodegradable and can be expanded to various applications by improving impact resistance and durability.

[Prior Art Document]

[Patent Document]

(Patent Document 1) Korean Laid-open Patent Publication No. 2012-0103158

### Detailed Description of the Invention

### Technical Problem

An object of the present invention is to provide a polyester resin having excellent physical properties such as impact absorption energy and hardness and excellent impact resistance and durability, and a process for preparing the same.

Further, another object of the present invention is to provide an environmentally friendly biodegradable polyester molded article prepared from the polyester resin, which is excellent in biodegradability and water degradability while achieving excellent physical properties as described above.

### Solution to the Problem

The present invention provides a biodegradable polyester resin, which comprises a first repeat unit comprising a first diol residue and an aromatic dicarboxylic acid residue and a second repeat unit comprising a second diol residue and an aliphatic dicarboxylic acid residue, wherein the ratio (X/Y) of the number (X) of the first repeat unit to the number (Y) of the second repeat unit is 0.8 to 3.0, and the impact strength index (ISI) represented by the following Equation 1 is 2.2 or more.

$$[\text{Equation 1}] \text{ Impact strength index (ISI)} = \frac{\text{IA (KJ/m)} \times \text{H3T (Shore D)}}{100}$$

In Equation 1, IA and H3T are values, exclusive of units, measured for a specimen of a biodegradable polyester sheet prepared from the biodegradable polyester resin.

IA is the impact absorption energy (KJ/m) when a specimen having an area of 10 cm × 10 cm is struck with a head of a triangular pyramid having a diameter of 16 mm and a height of 14 mm, and H3T is the hardness when measured with a Shore D tester for a specimen having a thickness of 3 mm according to ISO 868, ASTM D2240.

In addition, the present invention provides a process for preparing a biodegradable polyester resin, which comprises a first step of mixing a diol component and an aromatic dicarboxylic acid and pretreating it to obtain a slurry; a second step of subjecting a mixture comprising the slurry and an aliphatic dicarboxylic acid; or a mixture of a reaction product obtained by esterification of the slurry and an aliphatic dicarboxylic acid to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number (X) of the first repeat unit to the number (Y) of the second repeat unit is 0.6 to 1.8, and the impact strength index (ISI) represented by the above Equation 1 is 2.2 or more.

In addition, the present invention provides a biodegradable polyester molded article, which comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number (X) of the first repeat unit to the number (Y) of the second repeat unit is 0.8 to 3.0, and the impact strength index (ISI) represented by the above Equation 1 is 2.2 or more.

### Advantageous Effects of the Invention

In the biodegradable polyester resin according to an embodiment of the present invention, the first repeat unit comprising a first diol residue and an aromatic dicarboxylic acid residue and the second repeat unit comprising a second diol residue and an aliphatic dicarboxylic acid residue satisfy a ratio of the number of repeat units in a specific range, and the impact strength index of the resin satisfies a specific range or more. Thus, it is possible to further enhance the impact absorption energy and hardness as compared with conventional biodegradable resins.

Further, since the biodegradable polyester resin can provide a biodegradable polyester sheet, film, or molded article that is excellent in impact resistance, durability, and moldability, along with biodegradability, it can be utilized in diverse fields that require durability such as injection molded products, 3D filaments, and interior materials for construction to exhibit excellent characteristics.

### Brief Description of the Drawing

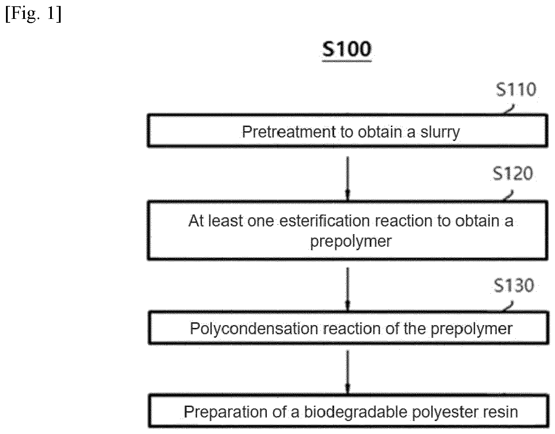

Fig. 1 schematically shows the process of preparing a biodegradable polyester resin according to an embodiment.

### Best Mode for Carrying out the Invention

Hereinafter, the present invention will be described in more detail.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

According to an embodiment of the present invention, there is provided a biodegradable polyester resin, which comprises a first repeat unit comprising a first diol residue and an aromatic dicarboxylic acid residue and a second repeat unit comprising a second diol residue and an aliphatic dicarboxylic acid residue, wherein the ratio (X/Y) of the number (X) of the first repeat unit to the number (Y) of the second repeat unit is 0.8 to 3.0, and the impact strength index (ISI) represented by the following Equation 1 is 2.2 or more.

$$[\text{Equation 1}]\ \text{Impact strength index (ISI)} = \frac{\text{IA (KJ/m)} \times \text{H3T (Shore D)}}{100}$$

In Equation 1, IA and H3T are values, exclusive of units, measured for a specimen of the biodegradable polyester sheet prepared from the biodegradable polyester resin.

IA is the impact absorption energy (KJ/m) when a specimen having an area of 10 cm × 10 cm is struck with a head of a triangular pyramid having a diameter of 16 mm and a height of 14 mm, and H3T is the hardness when measured with a Shore D tester for a specimen having a thickness of 3 mm according to ISO 868, ASTM D2240.

In general, biodegradable polyester resins, such as polybutyleneadipate terephthalate (PBAT)-based resins, have excellent flexibility. On the other hand, they have poor impact resistance, which may easily cause tearing or bursting, and they have weak stiffness, whereby their use is very limited. In order for various molded articles such as injection molded articles to be widely used, it is very important to enhance impact resistance and durability, along with an appropriate level of biodegradability.

To this end, it is necessary to achieve an appropriate level of physical properties such as strength, as well as physical properties such as impact absorption energy, hardness, and thermal shrinkage rate. In addition, in order to use the biodegradable polyester resin for various applications such as molded articles such as biodegradable polyester films and injection molded articles, it is necessary, in a blown film process, that a bubble is formed well and that the film surfaces are not bonded to each other during winding; further, it is necessary to minimize deformation such as shrinkage without bonding to the surface of a mold.

Thus, in order to achieve the above characteristics of a biodegradable polyester resin, it is very important to control the structure, impact strength, impact absorption energy, hardness, and thermal deformability of the biodegradable polyester resin.

In an embodiment of the present invention, the biodegradable polyester resin comprises a first repeat unit comprising a first diol residue and an aromatic dicarboxylic acid residue and a second repeat unit comprising a second diol residue and an aliphatic dicarboxylic acid residue, in which the ratio (X/Y) of the number (X) of the first repeat unit to the number (Y) of the second repeat unit is adjusted to a specific range, and the impact strength index is controlled to a specific range as well. Thus, it is possible to further enhance the impact absorption energy and hardness and to provide a biodegradable polyester sheet or film that is ultimately biodegradable while it has a low thermal shrinkage rate and excellent impact resistance, durability, and moldability.

Further, the technical significance of the biodegradable polyester resin resides in that it can be applied to not only a sheet or film having the above characteristics, but also to the application of molded articles such as injection molded articles (disposable), 3D filaments, interior materials for construction, and the like.

Hereinafter, the biodegradable polyester resin will be described in more detail.

**Biodegradable polyester resin**

The biodegradable polyester resin according to an embodiment of the present invention comprises a first repeat unit comprising a first diol residue and an aromatic dicarboxylic acid residue and a second repeat unit comprising a second diol residue and an aliphatic dicarboxylic acid residue.

The first and second diol residues each comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, and the aliphatic dicarboxylic acid residue comprises a residue of adipic acid, succinic acid, sebacic acid, or a derivative thereof.

The biodegradable polyester resin having the above structure may enhance the biodegradability, water degradability, and mechanical properties of a biodegradable polyester sheet, film, or molded article prepared using the same.

The diol residues may comprise a residue of 1,4-butanediol, 1,2-ethanediol, 1,3-propanediol, or a derivative thereof, specifically, 1,4-butanediol, 1,2-ethanediol, or a derivative thereof, more specifically, 1,4-butanediol or a derivative thereof. For example, in the case where the diols comprise 1,4-butanediol, it may be more advantageous for the enhancement in the biodegradability, water degradability, and mechanical properties of the biodegradable polyester resin or a biodegradable polyester sheet, film, or molded article prepared using the same.

In addition, in the case where the aromatic dicarboxylic acid and the aliphatic dicarboxylic acid each comprise the above components, they can be more uniformly reacted with the diol components according to the preparation process of the present invention, and the reaction efficiency can be increased; thus, it may be more advantageous for the preparation of the biodegradable polyester resin having the above physical properties.

Specifically, the first and second diol residues may each comprise a residue of 1,4-butanediol or a derivative thereof, the aromatic dicarboxylic acid residue may comprise a residue of terephthalic acid or a derivative thereof, and the aliphatic dicarboxylic acid residue may comprise a residue of adipic acid, succinic acid, or a derivative thereof.

For example, the biodegradable polyester resin may comprise a first repeat unit comprising a residue of 1,4-butanediol or a derivative thereof and a residue of terephthalic acid or a derivative thereof.

Alternatively, the biodegradable polyester resin may comprise a first repeat unit comprising a residue of 1,4-butanediol or a derivative thereof and a residue of dimethyl terephthalate or a derivative thereof.

The biodegradable polyester resin may comprise a second repeat unit comprising a residue of 1,4-butanediol or a derivative thereof and a residue of adipic acid or a derivative thereof.

Alternatively, the biodegradable polyester resin may comprise a second repeat unit comprising a residue of 1,4-butanediol or a derivative thereof and a residue of succinic acid or a derivative thereof.

The biodegradable polyester resin according to an embodiment of the present invention may comprise a first repeat unit comprising a residue of 1,4-butanediol or a derivative thereof and a residue of terephthalic acid or a derivative thereof; and a second repeat unit comprising a residue of 1,4-butanediol or a derivative thereof and a residue of adipic acid or a derivative thereof.

If the first repeat unit and the second repeat unit satisfy the above configuration, it may be more advantageous for providing a biodegradable polyester sheet or film having enhanced physical properties, as well as excellent biodegradability and water degradability.

Meanwhile, in order for the biodegradable polyester resin to be biodegradable with excellent impact resistance and durability and to provide a biodegradable polyester sheet, film, or molded article having excellent blow moldability and injection moldability at high temperatures and capable of minimizing shape deformation such as heat shrinkage, it is very important to control the number of the repeat units constituting the biodegradable polyester resin.

According to an embodiment of the present invention, the ratio (X/Y) of the number (X) of the first repeat unit to the number (Y) of the second repeat unit may be 0.8 to 3.0. Specifically, the ratio (X/Y) of the number (X) of the first repeat unit to the number (Y) of the second repeat unit may be 0.82 to 3.0, 0.83 to 3.0, 0.9 to 2.8, 0.9 to 2.5, 0.9 to 2.4, 1.0 to 2.4, 1.1 to 2.4, 1.3 to 2.4, or 1.4 to 2.4.

If the ratio (X/Y) of the number (X) of the first repeat unit to the number (Y) of the second repeat unit is less than the above range, the impact absorption energy and hardness may be decreased, and the heat shrinkage rate may be excessively increased. In particular, the blow moldability in a blown film process using the biodegradable polyester resin may be deteriorated, for example, a bubble is not properly shaped, is stretched to one side to be oblique, or bursts. The biodegradable polyester resin, film, or film may be bonded to the surface of the mold of an injection molding machine during injection molding, making it difficult to be detached, or shape deformation such as heat shrinkage may take place.

Specifically, the number of the first repeat unit may be 150 to 900, 180 to 900, 200 to 900, 300 to 900, 360 to 900, 380 to 800, 400 to 800, 410 to 780, 420 to 750, or 420 to 740.

The number of the second repeat unit may be 150 to 600, 180 to 550, 200 to 500, 220 to 490, 230 to 490, 250 to 460, 280 to 440, or 300 to 430.

If the number of the first repeat unit and the number of the second repeat unit each satisfy the above ranges, it is possible to enhance the physical properties such as impact resistance and durability of the biodegradable polyester resin and a biodegradable polyester sheet, film, or molded article prepared therefrom, to reduce the heat shrinkage rate, and to enhance the processibility in a blown film process or during injection molding with the bonding and shape deformation minimized.

In particular, If the number of the second repeat unit is controlled to the above range, the biodegradable polyester resin, or a biodegradable polyester sheet, film, or molded article prepared from the same, is tougher, and the strength and elongation are enhanced in combination, thereby achieving the desired level of impact absorption energy and hardness.

According to an embodiment of the present invention, the number of the first repeat unit may be the same as, or greater than, the number of the second repeat unit. In such a case, it may be more advantageous for achieving the desired effect of the present invention.

Specifically, as the number of the second repeat unit comprising a second diol residue and an aliphatic dicarboxylic acid residue is increased, the elongation of a sheet prepared from the biodegradable polyester resin may be increased, whereas the impact absorption energy and hardness may be decreased. Thus, the impact resistance and durability of a biodegradable polyester film or molded article prepared therefrom may be deteriorated, and problems such as shrinkage or shape deformation at high temperatures may take place.

On the other hand, if the number of the first repeat unit is the same as, or greater than, the number of the second repeat unit, the above problems can be solved, and the desired effect of the present invention can be effectively produced. In particular, since the biodegradable polyester resin according to an embodiment of the present invention has very excellent durability even if degradation takes place slowly, it can be advantageously used for interior materials for construction or injection molded articles. It can be ultimately biodegraded while excellent durability is secured for a certain period of time.

In the biodegradable polyester resin according to an embodiment of the present invention, the impact strength index (ISI) represented by the following Equation 1 is 2.2 or more.

$$[\text{Equation 1}] \text{ Impact strength index (ISI)} = \frac{\text{IA (KJ/m)} \times \text{H3T (Shore D)}}{100}$$

In Equation 1, IA and H3T are values, exclusive of units, measured for a specimen of the biodegradable polyester sheet prepared from the biodegradable polyester resin.

IA is the impact absorption energy (KJ/m) when a specimen having an area of 10 cm × 10 cm is struck with a head of a triangular pyramid having a diameter of 16 mm and a height of 14 mm, and H3T is the hardness when measured with a Shore D tester for a specimen having a thickness of 3 mm according to ISO 868, ASTM D2240.

The impact strength index (ISI) represented by Equation 1 is an index indicating the degree of impact resistance and durability of a biodegradable polyester sheet, film, or molded article prepared from a biodegradable polyester resin. It refers to a value obtained by dividing the product of the impact absorption energy (IA) and hardness (H3T) of the biodegradable polyester resin by 100.

The higher the impact strength index (ISI), the higher the impact resistance and/or durability. In addition, the higher the impact absorption energy (IA) and/or hardness (H3T) of the biodegradable polyester resin, the higher the impact strength index (ISI).

If the impact strength index (ISI) having the above characteristics satisfies an appropriate range, it is possible to simultaneously enhance the impact resistance and durability of a biodegradable polyester sheet, film, or molded article prepared from the biodegradable polyester resin.

Specifically, the impact strength index (ISI) of the biodegradable polyester resin may be, for example, 2.2 or more, for example, 2.3 or more, or, for example, 3.0 or more, and may be 2.2 to 5.0, for example, 2.3 to 5.0, for example, 2.5 to 5.0, for example, 2.2 to 4.0, for example, 2.3 to 4.0, for example, 3.0 to 4.0, for example, 3.0 to 5.0, for example, 3.0 to 4.0, or, for example, 3.0 to 3.5. If the impact strength index (ISI) of the biodegradable polyester resin satisfies 2.2 or more, specifically, 2.2 to 5.0, the biodegradable polyester sheet, film, or molded article has an appropriate level of impact resistance and durability; thus, it can be used in various fields to exhibit excellent characteristics.

If the impact strength index (ISI) of the biodegradable polyester resin is less than 2.2, the impact absorption energy (IA) and/or hardness (H3T) of the biodegradable polyester resin are too low, which may adversely affect the impact resistance and durability of a biodegradable polyester sheet, film, or molded article prepared from the biodegradable polyester resin. In addition, it may adversely affect the moldability such as blow moldability and injection moldability. In particular, the surfaces of the film stick to each other during winding due to severe stickiness, and blow moldability may be deteriorated.

The impact absorption energy (KJ/m) of a biodegradable polyester resin, which represents IA in Equation 1, is a value obtained by dividing the amount of impact absorption energy by the thickness of a biodegradable polyester sheet specimen when the specimen having an area of 10 cm × 10 cm is struck with a head of a triangular pyramid having a diameter of 16 mm and a height of 14 mm in a film impact test. It is represented by the following Equation 7:

[Equation 7]

$$\text{Impact absorption energy (IA) (KJ/m)} = \text{amount of impact absorption energy (KJ)} / \text{thickness (m)}$$

Here, the biodegradable polyester sheet is in a state before stretching, which may be similar, or identical, to the biodegradable polyester resin in terms of physical properties.

The impact absorption energy refers to the toughness of the surface into which the speed factor is considered. The higher the amount of impact absorption energy, the higher the impact strength.

The impact absorption energy (KJ/m) of the biodegradable polyester resin may be 6.0 KJ/m or more, for example, 6.2 KJ/m or more, or, for example, 7.2 KJ/m or more, and may be, for example, 6.0 KJ/m to 10.0 KJ/m, for example, 6.0 KJ/m to 9.5 KJ/m, for example, 6.0 KJ/m to 9.0 KJ/m, for example, 6.2 KJ/m to 9.5 KJ/m, for example, 6.2 KJ/m to 8.5 KJ/m, for example, 7.1 KJ/m to 9.0 KJ/m, or, for example, 7.1 KJ/m to 8.5 KJ/m.

If the impact absorption energy (KJ/m) of the biodegradable polyester resin satisfies the above range, the impact strength is at an appropriate level, which may be advantageous from the viewpoint of impact resistance and durability of a biodegradable polyester sheet, film, or molded article prepared from the biodegradable polyester resin.

The hardness (Shore D) of the biodegradable polyester resin that represents H3T in Equation 1 is a measure indicating the degree of hardness of a material. The higher the hardness, the harder the surface of a sheet, film, or molded article.

The hardness (Shore D) of a biodegradable polyester sheet specimen having a thickness of 3 mm prepared from the biodegradable polyester resin may be measured using a DeFelsko Shore D tester in accordance with ISO 868 and ASTM D2240. Here, the biodegradable polyester sheet is in a state before stretching, which may be similar, or identical, to the biodegradable polyester resin in terms of physical properties.

The hardness (Shore D) of the biodegradable polyester resin may be 32 or more, for example, 38 or more, or, for example, 42 or more, and may be, for example, 32 to 50, for example, 38 to 50, for example, 42 to 50, or, for example, 42 to 48.

If the hardness (Shore D) of the biodegradable polyester resin satisfies the above range, it is more advantageous for achieving the desired impact strength index in the present invention, and it is advantageous from the viewpoint of impact resistance and durability, so that it can be used for various molded articles.

Meanwhile, the biodegradable polyester resin may have a heat shrinkage rate ($TS_{50}$) of 30% or less represented by the following Equation 2:

$$[\text{Equation 2}] \ \text{Heat shrinkage rate } (TS_{50}, \%) = \frac{L_{25} - L_{50}}{L_{25}} \times 100$$

In Equation 2, $L_{25}$ is the initial length of a biodegradable polyester film specimen prepared from the biodegradable polyester resin at 25°C, and $L_{50}$ is the length of the biodegradable polyester film specimen prepared from the biodegradable polyester resin after it has been left for 5 minutes in a hot air oven at 50°C.

The heat shrinkage rate ($TS_{50}$) represented by Equation 2 is a value obtained by converting the degree of heat shrinkage of a biodegradable polyester film specimen at a hot air temperature of 50°C into a percentage. It is a value calculated as a percentage of the change between the initial length of a biodegradable polyester film specimen and the length of the specimen after it has been left in the hot air oven relative to the initial length of the specimen.

The heat shrinkage rate ($TS_{50}$) may be calculated by cutting a biodegradable polyester film into 150 mm in length and 2 cm in width regardless of the direction to prepare a specimen and then measuring the initial length thereof at room temperature and the length of the biodegradable polyester film specimen after it has been left for 5 minutes in a hot air oven at 50°C.

The heat shrinkage rate ($TS_{50}$) may be less than 30%, 28% or less, 26% or less, 25% or less, 24% or less, 23% or less, 22% or less, 20% or less, less than 20%, 18% or less, or 15% or less.

If the heat shrinkage rate ($TS_{50}$) satisfies the above range, the degree of heat shrinkage is small at a hot air temperature of 50°C or higher, the blow moldability or injection moldability can be further enhanced, and, at the same time, it is possible to improve the physical properties of a biodegradable polyester film or molded article. It may be more advantageous for various applications. The blow moldability may be evaluated at a temperature of 160°C in a blow molding machine by blowing air from the bottom and observing bubble formation and detachment of the surfaces of the film during winding. The injection moldability may be evaluated by molding the film into a biodegradable polyester sheet having a thickness of 400 μm at 190°C for about 15 minutes using an injection molding machine.

Meanwhile, in the biodegradable polyester resin according to an embodiment of the present invention, the thermal deformation index ($TD_{50}$) represented by the following Equation 3 may be 0.15 or less.

$$[\text{Equation 3}] \ \text{Thermal deformation index } (TD_{50}, 100) = \frac{TS_{50} \ (\%)}{100 \ (\%)} \times \frac{1}{ISI}$$

In Equation 3, $TS_{50}$ and ISI are as defined above.

The thermal deformation index ($TD_{50}$) represented by Equation 3 is an index indicating the degree of thermal deformation of a biodegradable polyester sheet, film, or molded article at a hot air temperature of 50°C relative to impact strength. It may vary depending on the heat shrinkage rate ($TS_{50}$) and impact strength index (ISI). That is, the thermal deformation index ($TD_{50}$) is a value obtained by dividing the heat shrinkage rate of a biodegradable polyester film specimen prepared from the biodegradable polyester resin divided by 100 by the impact strength index (ISI) of the biodegradable polyester resin (sheet specimen).

The thermal deformation index ($TD_{50}$) may be, for example, 0.14 or less, for example, 0.12 or less, for example, 0.11 or less, for example, 0.10 or less, for example, 0.08 or less, for example, less than 0.08, or, for example, 0.07 or less.

If the thermal deformation index ($TD_{50}$) satisfies the above range, the degree of thermal deformation is small relative to impact strength at a hot air temperature of 50°C or higher, whereby it is possible to enhance the durability and thermal resistance, the blow moldability or injection moldability can be further enhanced, and, at the same time, it is possible to improve the physical properties of a biodegradable polyester sheet, film, or molded article. It may be more advantageous for various applications.

Meanwhile, the biodegradable polyester resin may have a loss tangent (tan δ) of greater than 1 represented by the following Equation 4:

$$[\text{Equation 4}]$$

$$\text{Loss tangent } (\tan \delta) = G''/G'$$

In Equation 4, G' is the storage modulus of a biodegradable polyester sheet prepared from the biodegradable polyester resin at 240°C and a frequency of 5 rad/s in dynamic viscoelasticity measurement, and G" is the loss modulus of the biodegradable polyester sheet prepared from the biodegradable polyester resin at 240°C and a frequency of 5 rad/s in dynamic viscoelasticity measurement.

Here, the storage modulus and loss modulus of the polyester sheet may refer to the storage modulus and loss modulus of the polyester resin.

To determine the loss tangent (tan δ) of the biodegradable polyester resin, the biodegradable polyester resin is formed into a sheet, the storage modulus and loss modulus thereof are then measured using a rheometrics dynamic spectrometer (RDS, TA Instrument, Discovery HR 30), and it is calculated using the above Equation 4.

That is, the loss tangent (tan δ) of the biodegradable polyester resin is a ratio of the loss modulus (G") of the biodegradable polyester resin to the storage modulus (G') of the biodegradable polyester resin. If the value of the loss modulus (G") of the biodegradable polyester resin is greater than the value of the storage modulus (G') of the biodegradable polyester resin, the loss tangent (tan δ) of the biodegradable polyester resin represented by the above Equation 4 may be greater than 1.

Specifically, the loss tangent (tan δ) of the biodegradable polyester resin may be, for example, 1.05 to 1.30, for example, 1.05 to 1.25, for example, 1.10 to 1.25, for example, 1.10 to 1.20, or, for example, 1.15 to 1.19.

If the loss tangent (tan δ) of the biodegradable polyester resin satisfies the above range, it is possible to simultaneously enhance the impact resistance, durability, and moldability of a biodegradable polyester sheet, film, or molded article prepared from the biodegradable polyester resin, to enhance the impact absorption energy and strength, and to minimize the heat shrinkage rate and thermal deformation.

The storage modulus (G') of the biodegradable polyester resin may be measured after the biodegradable polyester resin is formed into a sheet, in which event it may be, for example, 200,000 dyne/cm$^2$ to 400,000 dyne/cm$^2$, for example, 250,000 dyne/cm$^2$ to 400,000 dyne/cm$^2$, for example, 280,000 dyne/cm$^2$ to 400,000 dyne/cm$^2$, for example, 300,000 dyne/cm$^2$ to 380,000 dyne/cm$^2$, or for example, 310,000 dyne/cm$^2$ to 360,000 dyne/cm$^2$.

The loss modulus (G") of the biodegradable polyester resin may be measured after the biodegradable polyester resin is formed into a sheet, in which event it may be, for example, 220,000 dyne/cm$^2$ to 450,000 dyne/cm$^2$, for example, 270,000 dyne/cm$^2$ to 430,000 dyne/cm$^2$, for example, 290,000 dyne/cm$^2$ to 430,000 dyne/cm$^2$, for example, 310,000 dyne/cm$^2$ to 420,000 dyne/cm$^2$, or, for example, 330,000 dyne/cm$^2$ to 400,000 dyne/cm$^2$.

If the storage modulus (G') and loss tangent (tan δ) of the biodegradable polyester resin each satisfy the above ranges, it is possible to simultaneously enhance the impact resistance, durability, and moldability of a biodegradable polyester sheet, film, or molded article prepared from the biodegradable polyester resin, to enhance the impact absorption energy and strength, and to minimize the heat shrinkage rate and thermal deformation.

Meanwhile, a biodegradable polyester film comprising the biodegradable polyester resin may have a biodegradability of 50% or more as measured by the amount of carbon dioxide generated according to KS M3100-1 and a water degradability reduction rate represented by the following Equation 5 of 50% or more:

[Equation 5]

$$\text{Water degradability reduction rate (\%)} = \frac{Mn_A - Mn_B}{Mn_A} \times 100$$

In Equation 5, $Mn_A$ and $Mn_B$ are each a number average molecular weight of a biodegradable polyester sheet prepared from the biodegradable polyester resin as measured using gel permeation chromatography (GPC) in which the biodegradable polyester sheet is immersed in water and subjected to water degradation acceleration at 80°C in a hot air oven.

$Mn_A$ is the initial number average molecular weight of a biodegradable polyester sheet, and $Mn_B$ is the number average molecular weight of the biodegradable polyester sheet after 3 months of the water degradation acceleration.

Here, the water degradation acceleration refers to immersing a biodegradable polyester sheet in water and subjecting it to hydrolysis at a temperature of 80°C.

The water degradability reduction rate may be calculated by measuring the initial number average molecular weight of a biodegradable polyester sheet and the number average molecular weight thereof after 3 months of the water degradation acceleration. That is, the water degradability reduction rate of the biodegradable polyester film is represented as a ratio in percentage of the difference between the initial number average molecular weight and the number average molecular weight of the biodegradable polyester sheet after three months to the initial number average molecular weight as represented by the above Equation 5 measured using gel permeation chromatography (GPC).

The water degradability reduction rate of the biodegradable polyester sheet may be 50% or more, 52% or more, 54% or more, 55% or more, 58% or more, 60% or more, 65% or more, 70% or more, 75% or more, 80% or more, 85% or more, or 90% or more.

As the water degradability reduction rate of the biodegradable polyester sheet satisfies the above range, the ultimate biodegradation may be possible while durability is secured. That is, the biodegradable polyester sheet, film, or molded article according to an embodiment of the present invention has the advantage of maintaining long-term durability despite its slow degradation.

The initial number average molecular weight ($Mn_A$) of the biodegradable polyester sheet may be 50,000 g/mole to 70,000 g/mole, for example, 50,000 g/mole to 68,000 g/mole or 50,000 g/mole to 65,000 g/mole.

The number average molecular weight ($Mn_B$) of the biodegradable polyester sheet measured after the biodegradable polyester sheet that has been immersed in water at 80°C is subjected to water degradation acceleration for 3 months may be 3,000 g/mole to 40,000 g/mole, for example, 4,000 g/mole to 35,000 g/mole or 5,000 g/mole to 30,000 g/mole.

If the initial number average molecular weight ($Mn_A$) of the biodegradable polyester sheet and the number average molecular weight ($Mn_B$) of the biodegradable polyester sheet after water degradation acceleration for three months each satisfy the above ranges, the water degradability reduction rate of the biodegradable polyester sheet may satisfy the above range, whereby biodegradation may be possible under seawater biodegradation or humid conditions.

The structure and physical properties of the biodegradable polyester resin according to an embodiment of the present invention can be efficiently achieved by using the process for preparing a biodegradable polyester resin according to an embodiment of the present invention.

Hereinafter, the process for preparing a biodegradable polyester resin will be described in detail.

**Process for preparing a biodegradable polyester resin**

According to another embodiment of the present invention, there is provided a process for preparing a biodegradable polyester resin, which comprises a first step of mixing a diol component and an aromatic dicarboxylic acid and pretreating it to obtain a slurry; a second step of subjecting a mixture comprising the slurry and an aliphatic dicarboxylic acid; or a mixture of a reaction product obtained by esterification of the slurry and an aliphatic dicarboxylic acid to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number (X) of the first repeat unit to the number (Y) of the second repeat unit is 0.8 to 3.0, and the impact strength index (ISI) represented by the above Equation 1 is 2.2 or more.

According to an embodiment of the present invention, in the process for preparing a biodegradable polyester resin, a diol component and an aromatic dicarboxylic acid are mixed and pretreated to obtain a slurry; the slurry is subjected to an esterification reaction to obtain a prepolymer; and the prepolymer is subjected to a polycondensation reaction to effectively achieve the desired structure and physical properties of the biodegradable polyester resin according to an embodiment of the present invention.

Referring to Fig. 1, the process for preparing a biodegradable polyester resin (S 100) comprises a first step (S 110) of mixing a diol component and an aromatic dicarboxylic acid and pretreating it to obtain a slurry.

That is, the first step is a pretreatment step before the esterification reaction, in which step a diol component and an aromatic dicarboxylic acid are mixed and formed into a slurry.

As a diol component and an aromatic dicarboxylic acid are mixed and pretreated to form a slurry, the diol component and the aromatic dicarboxylic acid can be uniformly reacted, and it is effective for expediting the esterification reaction, whereby the reaction efficiency can be increased.

In particular, if an aromatic dicarboxylic acid such as terephthalic acid has complete crystallinity and is in a powder form, its solubility in the diol is very low, whereby it may be difficult to carry out a homogeneous reaction. Thus, the pretreatment step of forming a slurry may play a very important role in providing a biodegradable polyester resin, sheet, film, and molded article having excellent physical properties according to an embodiment of the present invention and enhancing the reaction efficiency.

In addition, in the case where all of a diol component, an aromatic dicarboxylic acid, and an aliphatic dicarboxylic acid are mixed and subjected to an esterification reaction, without the step of mixing and pretreating the diol component and the aromatic dicarboxylic acid, the reaction of the diol component and the aliphatic dicarboxylic acid may be preferentially carried out. Thus, it may be difficult to achieve a biodegradable polyester resin that satisfies the ratio (X/Y) of the number of the first repeat unit and the second repeat unit as desired in the present invention.

According to an embodiment of the present invention, in the case where the aromatic dicarboxylic acid is terephthalic acid, terephthalic acid is a white crystal that has perfect crystallinity and sublimes at around 300°C under normal pressure without a melting point, and it has a very low solubility in the diol, making it difficult to carry out a homogeneous reaction. In the case where the pretreatment step is performed before the esterification reaction, a uniform reaction can be induced by increasing the surface area thereof for reacting with the diol in the solid matrix of terephthalic acid.

In addition, according to an embodiment of the present invention, in the case where the aromatic dicarboxylic acid is dimethyl terephthalate, dimethyl terephthalate may be made into a molten state at about 142°C to 170°C by the pretreatment step and reacted with the diol. Thus, it is possible to carry out the esterification reaction more quickly and efficiently.

Meanwhile, in the pretreatment process of the first step, the structure and physical properties of the biodegradable polyester resin may vary depending on the particle size, particle size distribution, pretreatment reaction conditions, and the like of the aromatic dicarboxylic acid.

For example, the aromatic dicarboxylic acid may comprise terephthalic acid, and the terephthalic acid may have an average particle diameter (D50) of 10 µm to 400 µm in a particle size distribution (PSD) measured by a particle size analyzer Microtrac S3500 and a standard deviation of the average particle diameter (D50) of 100 or less. The standard deviation refers to the square root of variance.

The average particle diameter (D50) of terephthalic acid may be, for example, 20 µm to 200 µm, for example, 30 µm to 180 µm, for example, or, for example, 50 µm to 100 µm. If the average particle diameter (D50) of terephthalic acid satisfies the above range, it may be more advantageous in terms of solubility enhancement in diols and reaction rate.

If the average particle diameter (D50) of terephthalic acid is less than 10 µm, the average particle diameter is too small, so that primary particles may be undesirably converted to agglomerated secondary particles. If the average particle diameter (D50) of terephthalic acid exceeds 400 µm, the average particle diameter is too large, so that the solubility in diols is reduced, thereby lowering the reaction rate, and it may be difficult to achieve a homogenization reaction.

In addition, the standard deviation of the average particle diameter (D50) may be 100 or less, for example, 5 to 90, for example, 5 to 80, or, for example, 5 to 70. If the standard deviation of the average particle diameter (D50) satisfies the above range, it may be more advantageous in terms of solubility enhancement in diols and reaction rate.

Further, if the average particle diameter (D50) and the standard deviation thereof satisfy the above ranges, the reaction time can be shortened by 1.5 times or more, so that it may be preferable in terms of reaction efficiency.

If the aromatic dicarboxylic acid is dimethyl terephthalate, it may be used in a molten state, or it, when measured in a particle state, may have an average particle diameter (D50) and a standard deviation thereof similar to those of terephthalic acid.

In the pretreatment process of the first step, the diol and the aromatic dicarboxylic acid may be mixed and put into a slurry agitator (tank).

According to an embodiment of the present invention, in the pretreatment process of the first step, the agitating force until the slurry is formed is very important; thus, the number and shape of agitating blades of the agitator and the conditions for forming the slurry are very important.

It may be more advantageous for producing an efficient agitating effect that the slurry agitator is, for example, an anchor type at the bottom, has a height to the agitator of 20 mm or more, and has two or more rotor blades.

For example, the slurry agitator may have a height to the agitator of 20 mm or more. That is, the reactor and the bottom of the agitator are almost contiguous with each other. In such a case, a slurry without precipitation may be obtained. If the number and shape of the agitator and the rotor blades do not satisfy the above conditions, when the diol and the aromatic dicarboxylic acid are initially mixed, the aromatic dicarboxylic acid may settle to the bottom, thereby causing phase separation.

The pretreatment process of the first step may comprise mixing the diol component and the aromatic dicarboxylic acid and agitating the mixture at 60°C to 100°C and 50 rpm to 200 rpm for 10 minutes or longer, for example, 10 minutes to 200 minutes. If the pretreatment process satisfies the above temperature, speed, and agitation time, a homogeneous slurry can be obtained without phase separation, which is advantageous in terms of reaction efficiency, and the physical properties of the biodegradable polyester resin desired in the present invention can be efficiently obtained.

The diol component may comprise 1,4-butanediol, 1,2-ethanediol, 1,3-propanediol, or a derivative thereof.

Specifically, the diol component may comprise 1,4-butanediol, 1,2-ethanediol, 1,3-propanediol, or a derivative thereof in an amount of 95% by mole or more, 98% by mole or more, 99% by mole or more, or 100% by mole, based on the total number of moles of the diol component. As the diol component comprises 1,4-butanediol, 1,2-ethanediol, 1,3-propanediol, or a derivative thereof in the above amount, it is possible to enhance the biodegradability, water degradability, and physical properties of the biodegradable polyester resin or a biodegradable polyester sheet, film, or molded article prepared from the same.

The diol component may be added at once or dividedly. For example, the diol component may be added dividedly at the time of mixing with the aromatic dicarboxylic acid and mixing with the aliphatic dicarboxylic acid.

The aromatic dicarboxylic acid may comprise one or more selected from the group consisting of terephthalic acid, dimethyl terephthalate, and a derivative thereof. Specifically, the aromatic dicarboxylic acid may be terephthalic acid or dimethyl terephthalate.

In addition, the aromatic dicarboxylic acid component may be used in an amount of 45% by mole to 70% by mole, 46% by mole to 70% by mole, 48% by mole to 70% by mole, 49% by mole to 70% by mole, 50% by mole to 70% by mole, 52% by mole to 70% by mole, 55% by mole to 70% by mole, 58% by mole to 70% by mole, or 60% by mole to 70% by mole, based on the total number of moles of the dicarboxylic acid component.

If the molar ratio of the aromatic dicarboxylic acid is controlled to the above range, it is more advantageous for producing the effects of the present invention and to further enhance the impact resistance and durability of a biodegradable polyester sheet, film, or molded article such as a biodegradable polyester injection molded article prepared using the same.

Referring back to Fig. 1, the process for preparing a biodegradable polyester resin comprises a second step (S120) of subjecting a mixture comprising the slurry and an aliphatic dicarboxylic acid; or a mixture of a reaction product obtained by esterification of the slurry and an aliphatic dicarboxylic acid to an esterification reaction at least once to obtain a prepolymer.

In the esterification reaction of the second step, the reaction time may be shortened by using the slurry obtained in the first step. For example, the reaction time may be shortened by 1.5 times or more by using the slurry obtained in the first step.

The esterification reaction of the second step may be carried out at least once.

According to an embodiment of the present invention, in the esterification reaction, an aliphatic dicarboxylic acid, or a diol and an aliphatic dicarboxylic acid, may be added to the slurry to carry out the esterification reaction once.

The esterification reaction may be carried out at 250°C or lower for 0.5 hour to 5 hours. Specifically, the esterification reaction may be carried out at atmospheric pressure or a reduced pressure at 180°C to 250°C, 185°C to 240°C, or 200°C to 240°C, until water as a by-product theoretically reaches 95%. For example, the esterification reaction may be carried out for 0.5 hour to 4.5 hours, 0.5 hour to 3.5 hours, or 1 hour to 3 hours, but it is not limited thereto.

The prepolymer may have a number average molecular weight of 500 to 10,000 g/mole. For example, the number average molecular weight of the prepolymer may be 500 to 8,500 g/mole, 500 to 8,000 g/mole, 500 to 7,000 g/mole, 500 to 5,000 g/mole, or 500 to 2,000 g/mole. As the number average molecular weight of the prepolymer satisfies the above range, it is possible to efficiently increase the molecular weight of the polymer in the polycondensation reaction.

According to another embodiment of the present invention, the esterification reaction may be carried out two or more times as a step of subjecting the slurry to a first esterification reaction; and a step of adding an aliphatic dicarboxylic acid, or a diol and an aliphatic dicarboxylic acid, to the product of the first esterification reaction and carrying out a second esterification reaction.

In the case where the esterification reaction is carried out two or more times, it is possible to enhance the reaction stability and reaction uniformity as compared with the case where the esterification reaction is carried out once, and the desired ratio of the number of the first repeat unit to the number of the second repeat unit can be adjusted, leading to an advantage in that the effect according to an embodiment of the present invention can be efficiently produced.

The first esterification reaction and the second esterification reaction may each be carried out at 250°C or lower for 0.5 hour to 5 hours. Specifically, the first esterification reaction and the second esterification reaction may each be carried out at atmospheric pressure and 180°C to 250°C, 185°C to 240°C, or 200°C to 240°C, until water as a by-product theoretically reaches 95%. For example, the first esterification reaction and the second esterification reaction may each be carried out for 0.5 hour to 4.5 hours, 0.5 hour to 3.5 hours, or 1 hour to 3 hours, but it is not limited thereto.

The prepolymer may have a number average molecular weight of 500 to 10,000 g/mole. For example, the number average molecular weight of the prepolymer may be 500 g/mole to 8,500 g/mole, 500 g/mole to 7,000 g/mole, 1,000 g/mole to 6,000 g/mole, or 2,500 g/mole to 5,500 g/mole. As the number average molecular weight of the prepolymer satisfies the above range, it is possible to efficiently increase the molecular weight of the polymer in the polycondensation reaction, thereby further enhancing the strength characteristics.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

The aliphatic dicarboxylic acid component may comprise adipic acid, succinic acid, sebacic acid, or a derivative thereof. Specifically, the aliphatic dicarboxylic acid component may comprise adipic acid or succinic acid.

In addition, the aliphatic dicarboxylic acid component may be used in an amount of 30% by mole to 55% by mole, 30% by mole to 54% by mole, 30% by mole to 52% by mole, 30% by mole to 51% by mole, 30% by mole to 50% by mole, 30% by mole to 48% by mole, 30% by mole to 45% by mole, 30% by mole to 42% by mole, or 30% by mole to 40% by mole, based on the total number of moles of the dicarboxylic acid component.

If the content of the aliphatic dicarboxylic acid is controlled to the above range, it is more advantageous for producing the effects of the present invention and to further enhance the impact resistance and durability of a biodegradable polyester sheet, film, or molded article such as a biodegradable polyester injection molded article prepared using the same.

In particular, since the aliphatic dicarboxylic acid component is composed of a linear chain, it may have an impact on the physical properties such as impact absorption energy and hardness of the biodegradable polyester resin and blow moldability or injection moldability.

Specifically, if the content of the aliphatic dicarboxylic acid component is too large, the impact absorption energy and hardness of the biodegradable polyester resin may be decreased, and the blow moldability and injection moldability of a biodegradable polyester sheet or film prepared from the biodegradable polyester resin may be deteriorated.

In the second step, nanocellulose may be further added at the time of the esterification reaction, for example, if the first and second esterification reactions are carried out, at the time of the first esterification reaction, the second esterification reaction, or both.

Specifically, in the case where the esterification reaction is carried out once, nanocellulose may be further added at the time of the esterification reaction, for example, at the time when an aliphatic dicarboxylic acid is, or a diol and an aliphatic dicarboxylic acid are, added.

In addition, in the case where the esterification reaction is carried out two or more times, nanocellulose may be added at the time of the first esterification reaction, the second esterification reaction, or both. For example, nanocellulose may be added at the time of the second esterification reaction, that is, at the time when an aliphatic dicarboxylic acid is, or a diol and an aliphatic dicarboxylic acid are, added, or at the initial stage of the esterification reaction. In such a case, the nanocellulose may be efficiently dispersed. In particular, it is preferable in terms of physical properties such as strength, impact absorption energy, and hardness, and thermal properties of the biodegradable polyester resin to add nanocellulose, and it is possible to enhance the strength, impact resistance, and durability of a biodegradable polyester sheet, film, or molded article.

The nanocellulose may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

The nanocellulose may have a diameter of 1 nm to 200 nm. For example, the diameter of the nanocellulose may be 1 nm to 150 nm, 1 nm to 120 nm, 1 nm to 100 nm, 1 nm to 95 nm, 5 nm to 90 nm, 10 nm to 80 nm, 1 nm to 50 nm, 5 nm to 45 nm, 10 nm to 60 nm, 1 nm to 10 nm, 10 nm to 30 nm, or 15 nm to 50 nm.

In addition, the nanocellulose may have a length of 5 nm to 10 $\mu$m. For example, the length of the nanocellulose may be 5 nm to 1 $\mu$m, 10 nm to 150 nm, 20 nm to 300 nm, 200 nm to 500 nm, 100 nm to 10 $\mu$m, 500 nm to 5 $\mu$m, 300 nm to 1 $\mu$m, or 1 $\mu$m to 10 $\mu$m.

As the diameter and length of the nanocellulose satisfy the above ranges, it is possible to further enhance the biodegradability and physical properties of the biodegradable polyester resin or a biodegradable polyester sheet, film, or molded article prepared from the same.

In addition, the nanocellulose may be pretreated with a bead mill or pretreated with ultrasound. Specifically, the nanocellulose may be obtained by pretreating nanocellulose dispersed in water with a bead mill or ultrasound.

First, the bead mill pretreatment may be carried out by a vertical mill or a horizontal mill as a wet milling apparatus. The horizontal mill is preferable in that the amount of beads that can be charged inside the chamber is greater, the machine's uneven wear is smaller, the wear of beads is smaller, and the maintenance and repair are convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of 0.3 mm to 1 mm. For example, the diameter of beads may be 0.3 mm to 0.9 mm, 0.4 mm to 0.8 mm, 0.45 mm to 0.7 mm, or 0.45 mm to 0.6 mm. As the diameter of beads satisfies the above range, it is possible to further enhance the dispersibility of the nanocellulose. If the diameter of beads exceeds the above range, the average particle size and particle size deviation of the nanocellulose may increase, which may reduce the dispersibility.

In addition, it is preferable from the viewpoint of transfer of sufficient energy that the bead mill pretreatment is carried out with beads having a specific gravity greater than that of the nanocellulose. For example, the beads may be one or more selected from the group consisting of zirconium, zircon, zirconia, quartz, and aluminum oxide, which have a specific gravity greater than that of the nanocellulose dispersed in water. Zirconium beads having a specific gravity greater than that of the nanocellulose dispersed in water by 4 times or more are preferred, but they are not limited thereto.

In addition, the ultrasound pretreatment is a method of physically crushing or pulverizing nanoparticles with waves generated by emitting ultrasound of 20 kHz into a solution.

The ultrasound pretreatment may be carried out for less than 30 minutes with an energy dose of 30,000 J or less. For example, the ultrasound pretreatment may be carried out for 25 minutes or less, 20 minutes or less, or 18 minutes or less with an energy dose of 25,000 J or less or 22,000 J or less. As the energy dose and the operation time satisfy the above ranges, the effect of the pretreatment with ultrasound, that is, the enhancement in dispersibility can be maximized. If the energy dose exceeds the above range, the nanoparticles may be re-agglomerated, thereby deteriorating the dispersibility.

The nanocellulose according to an embodiment may be pretreated with a bead mill or pretreated with ultrasound. Alternatively, the nanocellulose according to an embodiment may be pretreated with both a bead mill and ultrasonic waves. In such an event, it is preferable that ultrasound pretreatment is carried out after the bead mill pretreatment to prevent re-agglomeration, thereby enhancing the dispersibility.

The biodegradable polyester resin according to an embodiment has a polydispersity index (PDI) of less than 2.0. For example, the polydispersity index of the biodegradable polyester resin may be less than 2.0, 1.95 or less, or 1.9 or less.

As the polydispersity index is adjusted to the above range, the thermal resistance can be further enhanced. Specifically, if the polydispersity index exceeds the above range, the thermal resistance of the biodegradable polyester resin may be deteriorated. Thus, in the process of preparing a molded article such as a film using the biodegradable polyester resin, the rate of degradation of polymer may be increased, thereby reducing the processability and productivity.

The polydispersity index may be calculated according to the following Equation A.

$$\text{[Equation A]}$$

$$\text{Polydispersity index (PDI)} = Mw/Mn$$

in Equation A,
Mw is the weight average molecular weight (g/mole) of a resin, and Mn is the number average molecular weight (g/mole) of the resin.

In addition, the content of the nanocellulose may be, for example, 3,000 ppm or less, for example, 2,500 ppm or less, for example, 2,000 ppm or less, 1,800 ppm or less, 1,500 ppm or less, 1,000 ppm or less, 900 ppm or less, 800 ppm or less, 700 ppm or less, 600 ppm or less, 500 ppm or less, or 400 ppm or less, and may be, for example, 100 ppm or more, 150 ppm or more, 200 ppm or more, 250 ppm or more, or 300 ppm or more, based on the total weight of the diol, aromatic dicarboxylic acid, and aliphatic dicarboxylic acid. As the content of the nanocellulose satisfies the above range, the biodegradability and physical properties such as strength, impact absorption energy, and hardness can be further enhanced.

A titanium-based catalyst or a germanium-based catalyst may be further added to the slurry before the esterification reaction in the second step.

Specifically, in the case where the esterification reaction is carried out once, a titanium-based catalyst or a germanium-based catalyst may be added to the slurry.

In addition, in the case where the esterification reaction is carried out two or more times, a titanium-based catalyst or a germanium-based catalyst may be added to the slurry, the reaction product obtained by the first esterification of the slurry, or both.

Specifically, the biodegradable polyester resin may comprise at least one selected from the group consisting of titanium isopropoxide, antimony trioxide, dibutyltin oxide, tetrapropyl titanate, tetrabutyl titanate, tetraisopropyl titanate, antimony acetate, calcium acetate, and magnesium acetate; or a germanium-based catalyst selected from the group consisting of germanium oxide, germanium methoxide, germanium ethoxide, tetramethyl germanium, tetraethyl germanium, and germanium sulfide.

In addition, the content of the catalyst may be 100 ppm to 1,000 ppm based on the total weight of the diols, aromatic dicarboxylic acid, and aliphatic dicarboxylic acid. For example, the titanium-based catalyst or germanium-based catalyst may be employed in an amount of 100 ppm to 800 ppm, 150 ppm to 700 ppm, 200 ppm to 600 ppm, or 250 ppm to 550 ppm. As the content of the catalyst satisfies the above range, the physical properties can be further enhanced.

A phosphorus-based stabilizer may be further added during the esterification reaction in the second step, at the end of the esterification reaction, or both.

Specifically, in the case where the esterification reaction is carried out once, a phosphorus-based stabilizer may be added during the esterification reaction, at the end of the esterification reaction, or both.

In addition, in the case where the esterification reaction is carried out two or more times, a phosphorus-based stabilizer may be added during the first esterification reaction, during the second esterification reaction, or both, or at the end of the first esterification reaction or at the end of the second esterification reaction.

Specifically, the biodegradable polyester resin may further comprise at least one stabilizer comprising amine-based high-temperature thermal stabilizers such as tetraethylenepentaamine or phosphorus-based stabilizer selected from the group consisting of phosphoric acid, phosphorous acid, polyphosphoric acid, trimethylphosphate, triethylphosphate, triethylphosphonoacetate, trimethylphosphine, and triphenylphosphine.

In addition, the content of the phosphorus-based stabilizer may be 3,000 ppm or less based on the total weight of the diols, aromatic dicarboxylic acid, and aliphatic dicarboxylic acid. Specifically, the content of the phosphorus-based stabilizer may be, for example, 10 ppm to 3,000 ppm, 20 ppm to 2,000 ppm, 20 ppm to 1,500 ppm, or 20 ppm to 1,000 ppm, based on the total weight of the diols, aromatic dicarboxylic acid, and aliphatic dicarboxylic acid. As the content of the phosphorus-based stabilizer satisfies the above range, it is possible to suppress the degradation of the polymer due to high temperatures during the reaction process, thereby reducing the end groups of the polymer and improving the color.

At least one selected from the group consisting of an additive such as silica, potassium, and magnesium and a color correcting agent such as cobalt acetate may be further added at the end of the esterification reaction of the second step. That is, the additive and/or color correcting agent may be added after completion of the esterification reaction for stabilization, and the polycondensation reaction may then be carried out.

Referring back to Fig. 1, the process for preparing a biodegradable polyester resin (S100) comprises a third step (S130) of subjecting the prepolymer to a polycondensation reaction.

The polycondensation reaction may be carried out at 180°C to 280°C and 1.0 Torr or less for 1 hour to 5 hours. For example, the polycondensation reaction may be carried out at 190°C to 270°C, 210°C to 260°C, or 230°C to 255°C, at 0.9 Torr or less, 0.7 Torr or less, 0.2 Torr to 1.0 Torr, 0.3 Torr to 0.9 Torr, or 0.4 Torr to 0.6 Torr, for 1.5 hours to 5 hours, 2 hours to 5 hours, or 2.5 hours to 4.5 hours.

In addition, a titanium-based catalyst or a germanium-based catalyst may be further added to the prepolymer before the polycondensation reaction. In addition, one or more selected from the group consisting of an additive such as silica, potassium, and magnesium; a stabilizer such as trimethyl phosphate, triphenyl phosphate, trimethyl phosphine, phosphoric acid, phosphorous acid, and an amine-based stabilizer such as tetraethylenepentaamine; and a polymerization catalyst such as antimony trioxide and tetrabutyl titanate may be further added to the prepolymer before the polycondensation reaction.

The polymer may have a number average molecular weight of 40,000 g/mole or more. For example, the number average molecular weight of the polymer may be 43,000 g/mole or more, 45,000 g/mole or more, or 50,000 g/mole to 70,000 g/mole. As the number average molecular weight of the polymer satisfies the above range, the physical properties, impact resistance, durability, and moldability can be further enhanced.

Thereafter, pellets may be prepared from the polymer.

Specifically, the polymer may be cooled to 15°C or lower, 10°C or lower, or 6°C or lower, and the cooled polymer may then be cut to prepare pellets.

The cutting step may be carried out using a pellet cutter without limitations as long as it is commonly used in the art, and the pellets may have various shapes. Examples of the pellet cutting method may include an underwater cutting method or a strand cutting method.

## Biodegradable polyester sheet

Meanwhile, in an embodiment of the present invention, a biodegradable polyester sheet may be prepared from the biodegradable polyester resin.

For example, the biodegradable polyester sheet may be prepared using the biodegradable polyester resin or polyester resin pellets.

Specifically, the polyester resin prepared above is put in, for example, a stainless steel (SUS) mold and maintained at about 150 to 300°C under a pressure of 5 to 20 MPa for 1 minute to 30 minutes using a hot press. It is then taken out and immediately cooled at 18°C to 25°C in water for about 10 seconds to 5 minutes to obtain a biodegradable polyester sheet.

## Biodegradable polyester film

In an embodiment, the present invention may provide a biodegradable polyester film, which comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number (X) of the first repeat unit to the number (Y) of the second repeat unit is 0.8 to 3.0, and the impact strength index (ISI) represented by the above Equation 1 is 2.2 or more.

The biodegradable polyester film may have a thickness of 5 $\mu$m to 200 $\mu$m. For example, the thickness of the biodegradable polyester film may be 5 $\mu$m to 180 $\mu$m, 5 $\mu$m to 160 $\mu$m, 10 $\mu$m to 150 $\mu$m, 15 $\mu$m to 130 $\mu$m, 20 $\mu$m to 100 $\mu$m, 25 $\mu$m to 80 $\mu$m, or 25 $\mu$m to 60 $\mu$m.

The physical properties such as impact absorption energy, hardness, and heat shrinkage rate of the biodegradable polyester film may satisfy the ranges described above in the biodegradable polyester resin.

Meanwhile, the biodegradable polyester film may be prepared using the biodegradable polyester resin or biodegradable polyester resin pellets.

Specifically, the process for preparing a biodegradable polyester film may comprise a first step of mixing a diol component and an aromatic dicarboxylic acid and pretreating it to obtain a slurry; a second step of subjecting a mixture comprising the slurry and an aliphatic dicarboxylic acid; or a mixture of a reaction product obtained by esterification of the slurry and an aliphatic dicarboxylic acid to an esterification reaction at least once to obtain a prepolymer; a third step of subjecting the prepolymer to a polycondensation reaction; a fourth step of preparing pellets from the polymer; and a fifth step of drying and melt-extruding the pellets.

Details on the first step to the fourth step are as described above.

In the fifth step, the drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of the pellets satisfy the above ranges, it is possible to further enhance the quality of the biodegradable polyester film or molded article thus produced.

In the fifth step, the melt-extrusion may be carried out at a temperature of 270°C or lower. For example, the melt-extrusion may be carried out at a temperature of 265°C or lower, 260°C or lower, 255°C or lower, 150°C to 270°C, 150°C to 255°C, or 150°C to 240°C. The melt-extrusion may be carried out by a blown film process.

According to an embodiment of the present invention, inorganic substances and other additives may not be added during the preparation of the biodegradable polyester film. Specifically, as the biodegradable polyester film satisfies the specific structure and the specific ranges of physical properties of the biodegradable polyester resin, it is possible to achieve excellent physical properties, biodegradability, and water degradability even if inorganic substances and other additives are not added.

## Biodegradable polyester molded article

In an embodiment of the present invention, a biodegradable polyester molded article may be prepared from the biodegradable polyester resin.

That is, the biodegradable polyester molded article comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number (X) of the first repeat unit to the number (Y) of the second repeat unit is 0.8 to 3.0, and the impact strength index (ISI) represented by the above Equation 1 is 2.2 or more.

Specifically, the molded article may be prepared by molding the biodegradable polyester resin by a method known in the art such as extrusion and injection. The molded article may be an injection molded article, an extrusion molded article, a thin layer molded article, a blow molded article, a 3D filament, or an interior material for building, but it is not limited thereto.

For example, the molded article may be in the form of a film or sheet that can be used as agricultural mulching films, disposable gloves, disposable films, disposable bags, food packaging materials, or garbage bags, in the form of a fiber that can be used as fabrics, knitted fabrics, nonwoven fabrics, or ropes, or in the form of a container that can be used as a container for food packaging such as a lunch box. In addition, the molded article may be a molded article of various types such as disposable straws, spoons, food plates, and forks.

In particular, the molded article may be prepared from the biodegradable polyester resin, which can enhance the physical properties such as impact absorption energy and hardness, as well as, particularly, impact resistance and durability. Thus, it can show excellent properties when applied to packaging materials for products stored and transported at low temperatures, automotive interior materials that require durability, or garbage bags, mulching films, and disposable products.

## Embodiments for Carrying Out the Invention

Hereinafter, the present invention is explained in detail by the following Examples. However, these examples are provided only for illustration purposes, and the present invention is not limited thereto.

## [Example]

## Example 1

## Preparation of a biodegradable polyester resin

## Step 1: Pretreatment to obtain a slurry

As shown in Table 1, 1,4-butanediol (1,4-BDO) and terephthalic acid (TPA) were mixed at a molar ratio (1,4-BDO: TPA) of 1:1, which was then charged to a slurry tank (provided with an anchor type at the bottom, a height to the agitator of 30 mm, and three rotor blades) in a state without a catalyst. Here, terephthalic acid (TPA) had a D50 of 50 $\mu$m and a standard deviation (SD) of the D50 of 40.

Then, the mixture was pretreated by agitating it at 70°C and 150 rpm for 30 minutes, thereby obtaining a slurry without phase separation.

**Step 2: Preparation of a prepolymer**

The slurry obtained in step 1 was introduced into a reactor through a supply line, and 200 ppm of tetrabutyl titanate (Tyzor TnBT, Dupont) as a titanium-based catalyst was added thereto. A first esterification reaction was then carried out at 220°C and atmospheric pressure for about 2 hours until 95% of water, a by-product, was discharged.

Added to the reaction product were 40% by mole of 1,4-butanediol (1,4-BDO) based on the total number of moles of diol components, 40% by mole of adipic acid (AA) based on the total number of moles of dicarboxylic acid components, and 150 ppm of tetrabutyl titanate (Tyzor TnBT, Dupont) as a titanium-based catalyst based on the total weight of the diol, aromatic dicarboxylic acid, and aliphatic dicarboxylic acid. A second esterification reaction was then carried out at 200°C and atmospheric pressure for about 2 hours until 95% of water, a by-product, was discharged, thereby obtaining a prepolymer having a number average molecular weight of 5,000 g/mole.

**Step 3: Polycondensation reaction**

150 ppm of tetrabutyl titanate (Tyzor TnBT, Dupont) as a titanium-based catalyst and 600 ppm of triethyl phosphate stabilizer based on the total weight of the diol, aromatic dicarboxylic acid, and aliphatic dicarboxylic acid were added to the prepolymer obtained in step 2, which was stabilized for about 10 minutes. Thereafter, the reaction mixture was heated to 250°C, and a polycondensation reaction was carried out at 0.5 Torr for 4 hours to prepare a polymer having a number average molecular weight of 50,000 g/mole. It was cooled to 5°C and cut with a pellet cutter to obtain biodegradable polyester resin pellets.

**Preparation of a biodegradable polyester sheet**

Two Teflon sheets were prepared. A stainless steel (SUS) frame (area of 12 cm × 12 cm) was placed on one Teflon sheet, and about 7 g of the polyester resin pellets prepared above was put in the stainless steel (SUS) frame (area of 12 cm × 12 cm), which was covered with another Teflon sheet. It was placed in the center of a hot press (manufacturer: WithLab, model name: WL 1600SA) having an area of about 25 cm × 25 cm. It was maintained at about 210°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 $\mu$m.

**Preparation of a biodegradable polyester film**

The biodegradable polyester resin pellets were dried at 80°C for 5 hours and then melt-extruded at 160°C using a blown film extruder (Blown Film Extrusion Line, manufacturer: Eugene Engineering) to prepare a biodegradable polyester film having a thickness of 50 $\mu$m.

**Example 2**

A biodegradable polyester resin, a biodegradable polyester sheet, and a biodegradable polyester film were prepared in the same manner as in Example 1, except that terephthalic acid (TPA) having a different D50 and a different standard deviation (SD) was used, that the amounts of 1,4-butanediol (1,4-BDO), terephthalic acid (TPA), and adipic acid (AA) were changed, and that 700 ppm of cellulose nanocrystal (CNC) (particle diameter of 190 nm) treated with ultrasound for 1 minute was further added when 1,4-butanediol (1,4-BDO) and adipic acid (AA) were added, as shown in Table 1 below.

**Example 3**

A biodegradable polyester resin, a biodegradable polyester sheet, and a biodegradable polyester film were prepared in the same manner as in Example 1, except that dimethyl terephthalate (DMT) was used instead of terephthalic acid (TPA) and that the amount of each raw material was changed, as shown in Table 1 below.

**Example 4**

**Step 1: Pretreatment to obtain a slurry**

70% by mole of 1,4-butanediol (1,4-BDO) based on the total number of moles of diol components and 70% by mole of terephthalic acid (TPA) based on the total number of moles of dicarboxylic acid components were mixed, which was then charged to a slurry tank (provided with an anchor type at the bottom, a height to the agitator of 15 mm, and two rotor blades) in a state without a catalyst. Terephthalic acid (TPA) had a D50 of 50 μm and a standard deviation (SD) of the D50 of 20.

Then, the mixture was pretreated by agitating it at 80°C and 180 rpm for 15 minutes, thereby obtaining a slurry without phase separation.

**Step 2: Preparation of a prepolymer**

Added to the slurry obtained in step 1 were 30% by mole of 1,4-butanediol (1,4-BDO) based on the total number of moles of diol components, 30% by mole of adipic acid (AA) based on the total number of moles of dicarboxylic acid components, and 300 ppm of tetrabutyl titanate (Tyzor TnBT, Dupont) as a titanium-based catalyst based on the total weight of the diol, aromatic dicarboxylic acid, and aliphatic dicarboxylic acid. An esterification reaction was then carried out at 230°C and atmospheric pressure for about 3 hours until 95% of water, a by-product, was discharged, thereby obtaining a prepolymer having a number average molecular weight of 4,000 g/mole.

**Step 3: Polycondensation reaction**

150 ppm of tetrabutyl titanate (Tyzor TnBT, Dupont) as a titanium-based catalyst based on the total weight of the diol, aromatic dicarboxylic acid, and aliphatic dicarboxylic acid was added to the prepolymer obtained in step 2, which was heated to 245°C, and a polycondensation reaction was carried out at 0.5 Torr for 4 hours to prepare a polymer having a number average molecular weight of about 50,000 g/mole. It was cooled to 5°C and cut with a pellet cutter to obtain biodegradable polyester resin pellets.

**Preparation of a biodegradable polyester sheet and film**

Biodegradable polyester sheet and film were prepared in the same manner as in Example 1.

**Example 5**

A biodegradable polyester resin, a biodegradable polyester sheet, and a biodegradable polyester film were prepared in the same manner as in Example 2, except that the amounts of 1,4-butanediol (1,4-BDO), terephthalic acid (TPA), adipic acid (AA), and cellulose nanocrystal (CNC) (particle diameter of 190 nm) treated with ultrasound for 1 minute were changed in steps 1 and 2, and that 200 ppm of tetrabutyl titanate (Tyzor TnBT, Dupont) as a titanium-based catalyst based on the total weight of the diol, aromatic dicarboxylic acid, and aliphatic dicarboxylic acid was added in step 3, which was heated to 240°C, as shown in Table 1 below.

**Example 6**

A biodegradable polyester resin, a biodegradable polyester sheet, and a biodegradable polyester film were prepared in the same manner as in Example 1, except that the amount of each raw material was changed, as shown in Table 1 below.

**Comparative Example 1**

A biodegradable polyester resin, a biodegradable polyester sheet, and a biodegradable polyester film were prepared in the same manner as in Example 4, except that step 1 (pretreatment step) of Example 4 was not carried out, that the amounts of terephthalic acid (TPA) and adipic acid (AA) were changed, and that TPA having a different D50 and a different standard deviation (SD) was used, as shown in Table 1 below.

**Comparative Example 2**

A biodegradable polyester resin, a biodegradable polyester sheet, and a biodegradable polyester film were prepared in the same manner as in Comparative Example 1, except that the amounts of terephthalic acid (TPA) and adipic acid (AA) were changed, as shown in Table 1 below.

**Comparative Example 3**

A biodegradable polyester resin, a biodegradable polyester sheet, and a biodegradable polyester film were prepared in the same manner as in Comparative Example 1, except that the amounts of terephthalic acid (TPA) and adipic acid (AA) were changed and that TPA having a different D50 and a different standard deviation (SD) was used, as shown in Table 1 below.

**Comparative Example 4**

A biodegradable polyester resin, a biodegradable polyester sheet, and a biodegradable polyester film were prepared in the same manner as in Comparative Example 1, except that the amounts of terephthalic acid (TPA) and adipic acid (AA) were changed and that TPA having a different D50 and a different standard deviation (SD) was used, as shown in Table 1 below.

**Comparative Example 5**

A biodegradable polyester resin, a biodegradable polyester sheet, and a biodegradable polyester film were prepared in the same manner as in Example 1, except that step 1 (pretreatment step) of Example 1 was not carried out, that the amounts of terephthalic acid (TPA) and adipic acid (AA) were changed, and that TPA having a different D50 and a different standard deviation (SD) was used, as shown in Table 1 below.

[Table 1]

| | | Ex. 1 | Ex. 2 | Ex. 3 | Ex. 4 | Ex. 5 | Ex. 6 | C. Ex. 1 | C. Ex. 2 | C. Ex. 3 | C. Ex. 4 | C. Ex. 5 |
|---|---|---|---|---|---|---|---|---|---|---|---|---|
| 1,4-BDO (% by mole) | | 60+40 | 70+30 | 50+50 | 70+30 | 50+50 | 45+55 | 100 | 100 | 100 | 100 | 50+50 |
| DMT or TPA (% by mole) | | TPA 60 | TPA 70 | DMT 50 | TPA 70 | TPA 50 | TPA 45 | TPA 42 | TPA 80 | TPA 20 | TPA 50 | TPA 30 |
| Adipic acid (% by mole) | | 40 | 30 | 50 | 30 | 50 | 55 | 58 | 20 | 80 | 50 | 70 |
| CNC (ppm) | | | 700 | | | 500 | | | | | | |
| Resin | Number of first repeat unit (X) | 514 | 733 | 428 | 600 | 457 | 189 | 399 | 533 | 133 | 381 | 257 |
| | Number of second repeat unit (Y) | 343 | 314 | 428 | 257 | 457 | 231 | 495 | 133 | 533 | 381 | 600 |
| | X/Y | 1.49 | 2.33 | 1.00 | 2.33 | 1.00 | 0.82 | 0.81 | 4.00 | 0.25 | 1.00 | 0.43 |
| Process | Pretreatment | ○ | ○ | ○ | ○ | ○ | ○ | X | X | X | X | X |
| | First esterification reaction | ○ | ○ | ○ | ○ | ○ | ○ | ○ | ○ | ○ | ○ | ○ |
| | Second esterification reaction | ○ | ○ | ○ | X | ○ | ○ | X | X | X | X | ○ |
| | D50 of DMT or TPA ($\mu$m) | 50 | 100 | 100 | 50 | 150 | 200 | 200 | 200 | 550 | 10 | 200 |
| | SD of DMT or TPA | 40 | 40 | 40 | 20 | 20 | 60 | 50 | 50 | 50 | 120 | 50 |

**Evaluation Example**

**Evaluation Example 1: Average particle diameter (D50) and standard deviation**

**<Average particle diameter (D50) and standard deviation of the aromatic dicarboxylic acid>**

The aromatic dicarboxylic acid (TPA or DMT) was measured for the average particle diameter (D50) in a particle size distribution (PSD) by a particle size analyzer Microtrac S3500 (Microtrac Inc.) and a standard deviation thereof under the following conditions.

Environment for use

- Temperature: 10 to 35°C, humidity: 90% RH, non-condensing maximum
- D50 as an average particle size distribution for each section and SD were measured.

The standard deviation refers to the square root of variance and may be calculated using a software.

**<Particle diameter of the nanocellulose>**

The nanocellulose was subjected to measurement of particle size and particle size deviation through dynamic light scattering (DLS) at a temperature of 25°C and a measurement angle of 175° using Zetasizer Nano ZS (manufacturer: Marven). Here, the value of the peak derived through the polydispersity index (PdI) in the confidence interval of 0.5 was taken as the particle size.

**Evaluation Example2: Impact absorption energy**

The impact absorption energy was evaluated using a film impact test of Toyoseki.

The biodegradable polyester resins prepared in the Examples and Comparative Examples were each made into a biodegradable polyester sheet specimen having an area of 10 cm × 10 cm. The impact absorption energy (KJ/m) thereof was obtained by dividing the amount of impact absorption energy by the thickness thereof when the specimen was struck with a head of a triangular pyramid having a diameter of 16 mm and a height of 14 mm. The equation for calculating the impact absorption energy (KJ/m) is as follows:

$$[\text{Equation 7}]$$

$$\text{Impact absorption energy (IA) (KJ/m)} = \text{amount of impact absorption energy (KJ)} / \text{thickness (m)}$$

**Evaluation Example 3: Hardness (Shore D)**

The biodegradable polyester resins prepared in the Examples and Comparative Examples were each made into a biodegradable polyester sheet specimen having a thickness of 3 mm. The hardness thereof was measured using a DeFelsko Shore D tester in accordance with ISO 868 and ASTM D2240.

**Evaluation Example 4: Impact strength index**

The impact strength index (ISI) represented by the following Equation 1 was calculated using the results of the impact absorption energy and hardness:

$$[\text{Equation 1}] \; \text{Impact strength index (ISI)} = \frac{\text{IA (KJ/m)} \times \text{H3T (Shore D)}}{100}$$

In Equation 1, IA and H3T are values, exclusive of units, measured for a specimen of a biodegradable polyester sheet prepared from the biodegradable polyester resin.

IA is the impact absorption energy (KJ/m) when a specimen having an area of 10 cm × 10 cm is struck with a head of a triangular pyramid having a diameter of 16 mm and a height of 14 mm, and H3T is the hardness when measured with a Shore D tester for a specimen having a thickness of 3 mm according to ISO 868, ASTM D2240.

**Evaluation Example 5: Heat shrinkage rate (TS$_{50}$)**

The biodegradable polyester resins prepared in the Examples and Comparative Examples were each cut into 150 mm in length and 2 cm in width regardless of the direction to prepare a specimen. The initial length thereof at room temperature and the length of the biodegradable polyester film specimen after it had been left for 5 minutes in a hot air oven at 50°C were measured to calculate a heat shrinkage rate.

$$\text{[Equation 2] Heat shrinkage rate (TS}_{50}, \%) = \frac{L_{25} - L_{50}}{L_{25}} \times 100$$

In Equation 2, $L_{25}$ is the initial length of the biodegradable polyester film specimen prepared from the biodegradable polyester resin at 25°C, and $L_{50}$ is the length of the biodegradable polyester film specimen prepared from the biodegradable polyester resin after it has been left for 5 minutes in a hot air oven at 50°C.

**Evaluation Example 6: Thermal deformation index (TD$_{50}$)**

The thermal deformation index (TD$_{50}$) represented by the following Equation 3 was calculated using the results of the heat shrinkage rate (TS$_{50}$) and impact strength index (ISI):

$$\text{[Equation 3] Thermal deformation index (TD}_{50}, 100) = \frac{TS_{50} \;(\%)}{100 \;(\%)} \times \frac{1}{ISI}$$

in Equation 3, TS$_{50}$ and ISI are as defined above.

**Evaluation Example 7: Storage modulus, loss modulus, and loss tangent (tan $\delta$)**

Biodegradable polyester sheet specimens prepared in the Examples or Comparative Examples were each measured for the storage modulus and loss modulus using a rheometrics dynamic spectrometer (RDS; TA Instrument, Discovery HR 30), a dynamic viscoelasticity tester.
In addition, the loss tangent (tan $\delta$) represented by the following Equation 4 was calculated using the values of the storage modulus and loss modulus:

$$\text{[Equation 4]}$$

$$\text{Loss tangent (tan } \delta) = G''/G'$$

in Equation 4, G' is the storage modulus of a biodegradable polyester sheet prepared from the biodegradable polyester resin at 240°C and a frequency of 5 rad/s in dynamic viscoelasticity measurement, and G" is the loss modulus of the biodegradable polyester sheet prepared from the biodegradable polyester resin at 240°C and a frequency of 5 rad/s in dynamic viscoelasticity measurement.

**Evaluation Example 8: Water degradability reduction rate**

The biodegradable polyester sheets prepared in the Examples and Comparative Examples were each immersed in water (100% R.H) at 80°C, and a water degradation acceleration test was conducted.
Specifically, 5 g of the polyester sheets of the Examples and Comparative Examples were each put in 500 ml of deionized water (DI Water), which was covered with a stopper to prevent water from evaporating. Then, a water degradation acceleration test was conducted in a convection (hot air) oven at 80°C. The humidity environment of the biodegradable polyester sheet was the same as proceeding at 100% R.H because it was immersed in water.
The number average molecular weight of the biodegradable polyester sheet after 3 months was compared with the initial number average molecular weight as represented by the following Equation 5 using gel permeation chromatography (GPC).

[Equation 5]

$$\text{Water degradability reduction rate (\%)} = \frac{Mn_A - Mn_B}{Mn_A} \times 100$$

in Equation 5, $Mn_A$ and $Mn_B$ are each a number average molecular weight of a biodegradable polyester sheet prepared from the biodegradable polyester resin as measured using gel permeation chromatography (GPC) in which the biodegradable polyester sheet is immersed in water and subjected to water degradation acceleration at 80°C in a hot air oven.

$Mn_A$ is the initial number average molecular weight of a biodegradable polyester sheet, and $Mn_B$ is the number average molecular weight of the biodegradable polyester sheet after 3 months of the water degradation acceleration.

**Evaluation Example 9: Biodegradability**

The biodegradability was calculated by measuring the amount of carbon dioxide generated according to KS M3100-1. Specifically, an inoculum container having compost only manufactured in a compost factory was prepared. A test container in which a specimen in 5% by weight of the dry weight of the compost had been added was prepared. Thereafter, they were cultivated for 180 days under the conditions of a temperature of $58\pm2$°C, a moisture content of 50%, and an oxygen concentration of 6% or more. Carbon dioxide generated in each container was collected and titrated with an aqueous solution of phenolphthalein to measure the amount of carbon dioxide generated. The biodegradability was calculated from the measured amount of generated carbon dioxide according to the following Equation 6.

[Equation 6]

$$\text{Biodegradability (\%)} = \{(\text{amount of } CO_2 \text{ generated in a test container}) - (\text{amount of } CO_2 \text{ generated in an inoculum container})\} \times 100 \, / \, (\text{theoretical amount of } CO_2 \text{ generated in the test container})$$

**Evaluation Example 10: Blow moldability and injection moldability**

**<Blow moldability>**

The blow moldability was evaluated at a temperature of 160°C in a blow molding machine by blowing air from the bottom and observing bubble formation and detachment of the surfaces of the film during winding, as follows:

○: A bubble was in a good shape while it was neither stretched to one side to be oblique nor burst, and the surfaces thereof were not stuck to each other during winding
△: A bubble was shaped to some extent, it was neither stretched to one side to be oblique nor burst, or the surfaces thereof were slightly stuck to each other but readily detached during winding
×: A bubble was not properly shaped, was stretched to one side to be oblique or burst, or the surfaces thereof were stuck to each other so as not to be detached during winding

**<Injection moldability>**

Meanwhile, the biodegradable polyester resins prepared in the Examples and Comparative Examples were each molded into a biodegradable polyester sheet having a thickness of 400 $\mu$m at 190°C for about 15 minutes using an injection molding machine. The injection moldability of the biodegradable polyester sheet was evaluated as follows.

○: When it was molded into the mold of an injection molding machine at a temperature of 190°C, it was not stuck to the surface of the mold, so that it was readily detached, or there was neither shrinkage nor deformation.
△: When it was molded into the mold of an injection molding machine at a temperature of 190°C, it was stuck to the surface of the mold, but it could be detached, or there was slight shrinkage or deformation.
×: When it was molded into the mold of an injection molding machine at a temperature of 190°C, it was stuck to the surface of the mold, so that it was hardly detached, or there was shrinkage or deformation.

[Table 2]

| | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Impact absorption energy (KJ/m) | 7.0 | 7.4 | 6.9 | 6.7 | 7.2 | 6.1 | 5.0 | 5.3 | 4.4 | 5.3 | 4.6 |
| Shore D | 41 | 44 | 40 | 41 | 43 | 37 | 31 | 40 | 28 | 39 | 30 |
| $L_{25}$ (mm) | 150 | 150 | 150 | 150 | 150 | 150 | 150 | 150 | 150 | 150 | 150 |
| $L_{50}$ (mm) | 120 | 135 | 127.5 | 124.5 | 117 | 110 | 100.5 | 99 | 67.5 | 97.5 | 82.5 |
| Heat shrinkage rate ($TS_{50}$) (%) | 20 | 10 | 15 | 17 | 22 | 27 | 33 | 34 | 55 | 35 | 45 |
| ISI | 2.91 | 3.26 | 2.76 | 2.75 | 3.10 | 2.26 | 1.55 | 2.12 | 1.23 | 2.07 | 1.38 |
| $TD_{50}$ | 0.07 | 0.03 | 0.05 | 0.06 | 0.08 | 0.12 | 0.21 | 0.16 | 0.44 | 0.17 | 0.33 |
| G' (dyne/cm$^2$) | 329,000 | 359,000 | 312,500 | 358,500 | 332,950 | 258,000 | 228,000 | 259,200 | 298,750 | 308,700 | 302,500 |
| G" (dyne/cm$^2$) | 378,100 | 396,500 | 369,200 | 387,200 | 381,200 | 310,400 | 276,250 | 287,600 | 289,500 | 359,210 | 299,800 |
| Tan $\delta$ (G"/G') | 1.15 | 1.10 | 1.18 | 1.08 | 1.14 | 1.20 | 1.21 | 1.10 | 0.97 | 1.16 | 0.99 |
| Blow moldability | ○ | ○ | ○ | ○ | ○ | ○ | △ | △ | × | △ | × |
| Injection moldability | ○ | ○ | ○ | ○ | ○ | ○ | △ | ○ | × | △ | × |
| $Mn_A$ (g/mole) | 50,000 | 65,000 | 50,000 | 50,000 | 55,000 | 42,000 | 30,000 | 35,000 | 40,000 | 40,000 | 45,000 |
| $Mn_B$ (g/mole) | 20,000 | 29,000 | 5,000 | 22,500 | 5,500 | 4,200 | 1,500 | 19,200 | 2,000 | 4,000 | 4,500 |
| Water degradability reduction rate (%) after 3 months | 60 | 55 | 90 | 55 | 90 | 90 | 95 | 45 | 95 | 90 | 90 |

As shown in Table 2 above, the biodegradable polyester resins of the Examples, which satisfied both the ratio (X/Y) of the number of the first repeat unit to the number of the second repeat unit and the impact strength index (ISI) in the specific ranges, were overall excellent in impact resistance and durability.

Specifically, the biodegradable polyester resins of Examples 1 to 6 had an impact strength index (ISI) of 2.26 or more, which was enhanced as compared with Comparative Examples 1 to 5 having an impact strength index (ISI) of 1.23 to 2.12.

In addition, the biodegradable polyester resins of Examples 1 to 6 had an impact absorption energy of 6 KJ/m or more, a hardness of 32 or more, a heat shrinkage rate of 30% or less, and a thermal deformation index ($TD_{50}$) of 0.15 or less, indicating that the impact resistance and durability were remarkably enhanced, along with biodegradation, and both the blow moldability and injection moldability were excellent.

In contrast, in the biodegradable polyester resins of Comparative Examples 1 to 5, the impact absorption energy and hardness were significantly reduced as compared with the biodegradable polyester resins of Examples 1 to 6, and the heat shrinkage rate was increased as compared with the biodegradable polyester resins of Examples 1 to 6.

Meanwhile, it has been confirmed that the ratio of the number of the first repeat unit comprising a first diol residue and an aromatic dicarboxylic acid residue to the number of the second repeat unit comprising a second diol residue and an aliphatic dicarboxylic acid residue has an impact on the physical properties of the biodegradable polyester resin, film, or sheet.

Specifically, in the biodegradable polyester resins of Comparative Examples 2, 3, and 5, which did not satisfy the ratio of the number of the first repeat unit comprising a first diol residue and an aromatic dicarboxylic acid residue to the number of the second repeat unit comprising a second diol residue and an aliphatic dicarboxylic acid residue, the impact strength index (ISI) was remarkably reduced, and the thermal deformation index ($TD_{50}$) was remarkably increased, as compared with the biodegradable polyester resins of Examples 1 to 6 and Comparative Examples 1 and 4, along with very poor blow moldability and injection moldability.

In addition, it was confirmed that the addition of nanocellulose had an impact on the physical properties of the biodegradable polyester resin, sheet, or film.

Specifically, in Examples 2 and 5 in which nanocellulose was added, the impact absorption energy, hardness, and impact strength index (ISI) were significantly increased, and the heat shrinkage rate and thermal deformation index ($TD_{50}$) were reduced, indicating that the durability and impact resistance were further enhanced. In particular, in Examples 2 and 4 in which the ratio of the numbers between the first repeat unit and the second repeat unit was the same, the impact absorption energy, hardness, and shrinkage would vary depending on whether the nanocellulose was used. That is, when the nanocellulose was added, the physical properties were overall increased. It was also the case in Examples 3 and 5 in which the ratio of the numbers between the first repeat unit and the second repeat unit was the same.

Meanwhile, it was confirmed that the process conditions of the biodegradable polyester resin had an impact on the physical properties of the biodegradable polyester resin or film.

Specifically, the biodegradable polyester resins of Examples 1 to 3 prepared through the first and second esterification reactions were advantageous for achieving an impact strength index (ISI) and a thermal deformation index ($TD_{50}$) in appropriate ranges, along with enhanced physical properties, as compared with the biodegradable polyester resins of Examples 4 and 5 prepared through the first esterification reaction alone.

Further, the biodegradable polyester resin of Comparative Example 5 prepared through the first and second esterification reactions without slurry pretreatment had reduced impact resistance and durability and poor blow moldability and injection moldability, as compared with the biodegradable polyester resins of the Examples in which the slurry pretreatment had been carried out. Thus, it may be difficult to broadly expand its applications.

Meanwhile, it was confirmed that the impact absorption energy and hardness increased as the impact strength index (ISI) of the biodegradable polyester resin increased. For example, the biodegradable polyester resins of Examples 1 to 5 had an impact strength index (ISI) of 2.7 or more and were enhanced in impact absorption energy and hardness as compared with Example 6, in which the impact strength index was 2.25, and Comparative Examples 1 to 5.

In particular, in Examples 1 to 5, in which the number of the first repeat unit is the same as, or greater than, the number of the second repeat unit, the desired effects of the present invention were overall enhanced.

**Claims**

1. A biodegradable polyester resin, which comprises a first repeat unit comprising a first diol residue and an aromatic dicarboxylic acid residue and a second repeat unit comprising a second diol residue and an aliphatic dicarboxylic acid residue,

   wherein the ratio (X/Y) of the number (X) of the first repeat unit to the number (Y) of the second repeat unit is 0.8 to 3.0, and

the impact strength index (ISI) represented by the following Equation 1 is 2.2 or more:

$$[\text{Equation 1}] \text{ Impact strength index (ISI)} = \frac{\text{IA (KJ/m)} \times \text{H3T (Shore D)}}{100}$$

in Equation 1, IA and H3T are values, exclusive of units, measured for a specimen of the biodegradable polyester sheet prepared from the biodegradable polyester resin,

IA is the impact absorption energy (KJ/m) when a specimen having an area of 10 cm $\times$ 10 cm is struck with a head of a triangular pyramid having a diameter of 16 mm and a height of 14 mm, and

H3T is the hardness when measured with a Shore D tester for a specimen having a thickness of 3 mm according to ISO 868, ASTM D2240.

2. The biodegradable polyester resin of claim 1, wherein the number of the first repeat unit is the same as, or greater than, the number of the second repeat unit.

3. The biodegradable polyester resin of claim 1 or claim 2, wherein the number (X) of the first repeat unit is 150 to 900, and the number (Y) of the second repeat unit is 150 to 600.

4. The biodegradable polyester resin of any one of claims 1-3, wherein the biodegradable polyester resin has a heat shrinkage rate ($TS_{50}$) of 30% or less represented by the following Equation 2:

$$[\text{Equation 2}] \text{ Heat shrinkage rate } (TS_{50}, \%) = \frac{L_{25} - L_{50}}{L_{25}} \times 100$$

in Equation 2, $L_{25}$ is the initial length of a biodegradable polyester film specimen prepared from the biodegradable polyester resin at 25°C, and

$L_{50}$ is the length of the biodegradable polyester film specimen prepared from the biodegradable polyester resin after it has been left for 5 minutes in a hot air oven at 50°C.

5. The biodegradable polyester resin of claim 4, wherein the thermal deformation index ($TD_{50}$) represented by the following Equation 3 is 0.15 or less:

$$[\text{Equation 3}] \text{ Thermal deformation index } (TD_{50}, 100) = \frac{TS_{50} \ (\%)}{100 \ (\%)} \times \frac{1}{ISI}$$

in Equation 3, $TS_{50}$ and ISI are as defined above.

6. The biodegradable polyester resin of any one of claims 1-5, wherein the impact strength index (ISI) is 2.2 to 5.0

7. The biodegradable polyester resin of any one of claims 1-6, wherein IA is 6 KJ/m or more, and H3T is 32 Shore D or more.

8. The biodegradable polyester resin of any one of claims 1-7, wherein a biodegradable polyester sheet prepared from the biodegradable polyester resin has a storage modulus of 200,000 dyne/cm$^2$ to 400,000 dyne/cm$^2$ and a loss modulus of 220,000 dyne/cm$^2$ to 450,000 dyne/cm$^2$ at 240°C and a frequency of 5 rad/s in dynamic viscoelasticity measurement.

9. The biodegradable polyester resin of any one of claims 1-8, wherein the biodegradable polyester resin has a water degradability reduction rate represented by the following Equation 5 of 50% or more:

$$[\text{Equation 5}]$$

$$\text{Water degradability reduction rate } (\%) = \frac{Mn_A - Mn_B}{Mn_A} \times 100$$

in Equation 5, $Mn_A$ and $Mn_B$ are each a number average molecular weight of a biodegradable polyester sheet prepared from the biodegradable polyester resin as measured using gel permeation chromatography (GPC) in which the biodegradable polyester sheet is immersed in water and subjected to water degradation acceleration at 80°C in a hot air oven,

$Mn_A$ is the initial number average molecular weight of a biodegradable polyester sheet, and

$Mn_B$ is the number average molecular weight of the biodegradable polyester sheet after 3 months of the water degradation acceleration.

10. The biodegradable polyester resin of any one of claims 1-9, wherein the first and second diol residues each comprise a residue of 1,4-butanediol, 1,2-ethanediol, 1,3-propanediol, or a derivative thereof,

the aromatic dicarboxylic acid residue comprises a residue of terephthalic acid, dimethyl terephthalate, or a derivative thereof, and

the aliphatic dicarboxylic acid residue comprises a residue of adipic acid, succinic acid, sebacic acid, or a derivative thereof.

11. The biodegradable polyester resin of claim 10, wherein the first and second diol residues are each a residue of 1,4-butanediol or a derivative thereof,

the aromatic dicarboxylic acid residue is a residue of terephthalic acid, dimethyl terephthalate, or a derivative thereof, and

the aliphatic dicarboxylic acid residue is a residue of adipic acid or a derivative thereof.

12. The biodegradable polyester resin of any one of claims 1-11, wherein the aromatic dicarboxylic acid comprises terephthalic acid, and the terephthalic acid has an average particle diameter (D50) of 10 $\mu$m to 400 $\mu$m in a particle size distribution (PSD) measured by a particle size analyzer Microtrac S3500 and a standard deviation of the average particle diameter (D50) of 100 or less.

13. The biodegradable polyester resin of any one of claims 1-12, wherein the biodegradable polyester resin further comprises nanocellulose having a diameter of 1 nm to 200 nm and a length of 5 nm to 10 $\mu$m.

14. A process for preparing a biodegradable polyester resin according to any one of claims 1-13, which comprises:

a first step of mixing a diol component and an aromatic dicarboxylic acid and pretreating it to obtain a slurry;

a second step of subjecting a mixture comprising the slurry and an aliphatic dicarboxylic acid; or a mixture of a reaction product obtained by esterification of the slurry and an aliphatic dicarboxylic acid to an esterification reaction at least once to obtain a prepolymer; and

a third step of subjecting the prepolymer to a poly condensation reaction,.

15. A biodegradable polyester molded article which comprises a biodegradable polyester resin according to any one of claims 1-13.

[Fig. 1]

## S100

S110

| Pretreatment to obtain a slurry |
| --- |

S120

| At least one esterification reaction to obtain a prepolymer |
| --- |

S130

| Polycondensation reaction of the prepolymer |
| --- |

| Preparation of a biodegradable polyester resin |
| --- |

| | Europäisches Patentamt European Patent Office Office européen des brevets | **EUROPEAN SEARCH REPORT** | Application Number EP 22 17 5247 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 483 522 A (SHANGHAI GENIUS ADVANCED MAT) 1 January 2014 (2014-01-01) * Examples * * Claims * ----- | 1-15 | INV. C08G63/183 C08J5/18 |
| A | US 2001/007899 A1 (CHUNG HYUN SOO [KR] ET AL) 12 July 2001 (2001-07-12) * Examples * * Claims * ----- | 1-15 | |

TECHNICAL FIELDS SEARCHED (IPC)

C08G
C08J

The present search report has been drawn up for all claims

| Place of search | Date of completion of the search | Examiner |
|---|---|---|
| The Hague | 20 September 2022 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 5247

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2022

| Patent document cited in search report | | Publication date | Patent family member(s) | | Publication date |
|---|---|---|---|---|---|
| CN 103483522 | A | 01-01-2014 | NONE | | |
| US 2001007899 | A1 | 12-07-2001 | EP | 1106640 A2 | 13-06-2001 |
| | | | JP | 2001187818 A | 10-07-2001 |
| | | | KR | 20010055721 A | 04-07-2001 |
| | | | US | 2001007899 A1 | 12-07-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120103158